Europäisches Patentamt

European Patent Office

Office européen des brevets

(19)

(11) Veröffentlichungsnummer : **0 133 949**
**B1**

(12)

# EUROPÄISCHE PATENTSCHRIFT

(45) Veröffentlichungstag der Patentschrift :
08.07.87

(21) Anmeldenummer : 84108649.9

(22) Anmeldetag : 21.07.84

(51) Int. Cl.⁴ : **C 09 D   5/02**, C 09 D   3/48

(54) **Wasserverdünnbare Beschichtungsmittel für mineralische und bituminöse Untergründe und Verfahren zur Herstellung der Beschichtungsmittel.**

(30) Priorität : 11.08.83 AT 2898/83
29.09.83 AT 3460/83

(43) Veröffentlichungstag der Anmeldung :
13.03.85 Patentblatt 85/11

(45) Bekanntmachung des Hinweises auf die Patenterteilung : 08.07.87 Patentblatt 87/28

(84) Benannte Vertragsstaaten :
CH DE FR GB IT LI

(56) Entgegenhaltungen :
EP-A- 0 001 779
EP-A- 0 066 108
DE-A- 2 044 602
DE-A- 3 137 479
GB-A- 1 500 513
Die Akte enthält technische Angaben, die nach dem Eingang der Anmeldung eingereicht wurden und die nicht in dieser Patentschrift enthalten sind.

(73) Patentinhaber : Vianova Kunstharz Aktiengesellschaft

A-8402 Werndorf (AT)

(72) Erfinder : Klintschar, Gerfried, Dr.
Rieshang 20
A-8010 Graz (AT)
Erfinder : Manger, Hans
Rudolfstrasse 55
A-8010 Graz (AT)
Erfinder : Tulacs, Laszlo, Dipl.-Ing.
Münzgrabengürtel 21
A-8010 Graz (AT)
Erfinder : Zückert, Betram, Dr.
Krottendorferstrasse 90
A-8052 Graz (AT)

(74) Vertreter : Pitter, Robert, Dr. et al
Leechgasse 21 Postfach 191
A-8010 Graz (AT)

EP 0 133 949 B1

**Beschreibung**

Die Erfindung betrifft wasserverdünnbare Beschichtungsmittel für mineralische und bituminöse Untergründe, insbesonders für die Herstellung von Straßenmarkierungen und die Beschichtung von Fassaden oder ähnlichem auf der Basis von Emulsionen physikalisch trocknender Lackbindemittel, welche als emulgierende Komponente wasserverdünnbare Kunstharzbindemittel enthalten, sowie die Herstellung dieser Beschichtungsmittel.

Unter dem Begriff « mineralische Untergründe » werden im folgenden natürliche Steine, anorganisch oder organisch gebundene Mineralstoffe, wie Beton, Kalkputz etc. bzw. Kunstharz- oder bitumengebundene Mineralstoffe verstanden.

Wie auf anderen Gebieten der Anstrichtechnik setzt sich auch bei der Herstellung von Straßenmarkierungen oder bei der Beschichtung von Fassaden der Wunsch nach wäßrigen Systemen in zunehmendem Maße durch.

Straßenmarkierungsfarben auf Basis von wäßrigen Polymerdispersionen werden beispielsweise in der EP-A1 00 66 108 beschrieben, wobei Mischungen von Reinacrylharzdispersionen und Dispersionen von Carboxylgruppen enthaltenden Styrol-Dibutylfumarat-Copolymeren mit Polypropylenimin chemisch vernetzt werden. Es handelt sich dabei um Zwei komponentensysteme, welche nur eine begrenzte Topfzeit aufweisen.

Obwohl durch diese Maßnahme die Qualität von Dünnschichtmarkierungen gegenüber den früher versuchsweise eingesetzten wäßrigen Dispersionen, wie sie z. B. in der DE-PS 12 32 871 oder der US-PS 39 40 385 beschrieben sind, verbessert werden konnte, zeigen die Produkte der genannten EP 00 60 108 neben den applikationstechnischen Nachteilen von 2-Komponenten-Beschichtungsmitteln die für Dispersionen typische schlechte Naßhaftung auf allen möglichen Substraten.

Wasserverdünnbare Kunstharzbindemittel vom Lösungs- oder Emulsionstyp, wie sie für viele andere Zwecke bereits erfolgreich eingesetzt werden, sind für sich allein als Straßenmarkierungsfarben aufgrund ihrer relativ langsamen Trocknung wenig geeignet. Auch als Fassadenfarben haben sie sich aufgrund ihrer Alkaliempfindlichkeit auf den dabei weitgehend vorliegenden alkalischen Untergründen als Alleinbindemittel nicht bewährt.

Es wurde nun gefunden, daß Beschichtungsmittel für mineralische und bituminöse Untergründe auf der Basis von Kombinationen von in organischen Lösungsmitteln gelösten physikalisch trocknenden, nicht wasserlöslichen Bindemitteln und nach Salzbildung wasserlöslichen Kunstharzbindemitteln die genannten Nachteile überraschenderweise nicht zeigen.

Die vorliegende Erfindung betrifft dementsprechend wasserverdünnbare Beschichtungsmittel für mineralische und bituminöse Untergründe, insbesonders für die Herstellung von Straßenmarkierungen und die Beschichtung von Fassaden oder ähnlichem, bestehend aus einer mit Wasser emulgierbaren Kombination aus

(A) mindestens 30 Gew.-%, vorzugsweise 50-75 Gew.-% einer Lösung in organischen Lösungsmitteln eines physikalisch trocknenden, nicht wasserverdünnbaren organischen Polymeren vom Typ der Acrylpolymeren- oder -copolymeren, Vinylpolymeren oder -copolymeren, Chlor- oder Cyclokautschuk, bituminöse Massen oder hochacrylierten Alkydharze,

(B) 10-50 Gew.-%, vorzugsweise 15-25 Gew.-% eines durch Salzbildung wasserlöslich gemachten Alkydharzes und/oder einer ölfreien Polyesters und/oder Acryl- und/oder Vinylcopolymeren und/oder Epoxidharz-Amin-Adduktes und gegebenenfalls

(C) 15-35 Gew.-%, vorzugsweise 20-30 Gew.-% eines Weichmachungsmittels,
wobei das Verhältnis zwischen der Komponenten (A) + gegebenenfalls (C) und der Komponente (B) in einem Bereich zwischen 8,5 : 1 und 1,5 : 1, vorzugsweise zwischen 6,5 : 1 und 3 : 1 liegt, und den üblichen Pigmenten, Füllstoffen und Hilfsmitteln.

Die Erfindung betrifft weiterhin ein Verfahren zur Herstellung wasserverdünnbarer Beschichtungsmittel für mineralische und bituminöse Untergründe, insbesondere für die Herstellung von Straßenmarkierungen und die Beschichtung von Fassaden oder ähnlichem, welches dadurch gekennzeichnet ist, daß man eine Mischung aus

(A) mindestens 30 Gew.-%, vorzugsweise 50-75 Gew.-% eines physikalisch trocknenden, nicht wasserlöslichen Polymeren vom Typ der Acrylpolymeren oder -copolymeren, Vinylpolymeren oder -copolymeren, Chlor- oder Cyclokautschuk oder bituminösen Massen und/oder hochacrylierten Alkydharzen,

(B) 10-50, vorzugsweise 15-25 Gew.-% eines nach Salzbildung mit Basen bzw. Säuren wasserlöslichen, mit trocknenden und/oder nichttrocknenden Fettsäuren modifizierten Alkydharzes und/oder eines ölfreien Polyesters und/oder eines Acryl- und/oder Vinylcopolymeren und/oder eines Epoxidharz-Amin-Adduktes und gegebenenfalls

(C) 15-35, vorzugsweise 20-30 Gew.-% eines Weichmachungsmittels,
gegebenenfalls nach Zusatz eines die Komponente (A) lösenden, vorzugsweise nicht wassermischbaren

2

Lösungsmittels, in eine homogene Phase überführt, in 80-250, vorzugsweise 90-120 Gew.-% (bezogen auf das eingesetzte Festharz) Wasser emulgiert und die salzbildenden Gruppen der Komponente (B) mit Basen bzw. Säuren neutralisiert, sowie gegebenenfalls in die Emulsion Pigmente, Füllstoffe und Hilfsmittel einarbeitet, wobei das Verhältnis zwischen der Summe der Komponenten (A) + gegebenenfalls (C) und der Komponente (B) zwischen 8,5 : 1 und 1,5 : 1, vorzugsweise zwischen 6,5 : 1 und 3 : 1 liegt.

Die erfindungsgemäßen Kombinationen zeigen neben einer auf den physikalisch-trocknenden Anteil zurückgehenden guten und raschen Härtung eine ausgezeichnete Naßhaftung auf den angegebenen Substraten.

Ein weiterer Vorteil der erfindungsgemäßen Kombinationen liegt in der Möglichkeit der Wahl einer Lieferform, welche dem Kunden keine Lagerprobleme bringt, wie sie bei den bereits in verdünnter wäßriger Lösung vorliegenden Polymerdispersionen sowohl von Seiten des Lagervolumens als auch von Seiten der Temperaturempfindlichkeit auftreten.

Als Komponente (A) werden physikalisch trocknende Bindemittel, welche in Wasser praktisch nicht löslich sind, eingesetzt. Diese Komponente liegt im Beschichtungsmittel in Form einer Lösung in geeigneten organischen Lösungsmitteln vor, wobei das Lösungsmittel vorzugsweise einen hydrophoben Charakter aufweisen soll, d. h. nicht mit Wasser mischbar sein soll.

Geeignete Bindemittel dieser Art sind beispielsweise Acrylpolymere oder -copolymere, Vinylpolymere oder -copolymere, Polystyrol, Vinyltoluol-α-Methylstyrol-Copolymerisate, Chlorkautschuk, Cyclokautschuk oder bituminöse Massen. Gegebenenfalls können diese physikalisch trocknenden Bindemittel auch untergeordnete Mengen von oxidativ trocknenden Gruppen aufweisen, wie dies beispielsweise bei den hochacrylierten Alkydharzen der Fall sein kann.

Die Bindemittel dem Komponente (A) werden vor oder während der Mischung mit den anderen Komponenten in den geeigneten Lösungsmitteln gelöst, wobei nichtwasserverdünnbare Lösungsmittel, wie aliphatische oder aromatische Kohlenwasserstoffe, Ketone oder Ester bevorzugt werden.

Die Bindemittel der Komponente (B) sind handelsübliche Alkydharze und/oder Acryl- und/oder Vinylcopolymere, welche durch Salzbildung in eine wasserlösliche Form übergeführt werden können. Diese Bindemittel liegen entweder in organischen Lösungsmitteln oder mit geringen Wassergehalten in neutralisierter oder nichtneutralisierter Form vor. Vorzugsweise kommen für die erfindungsgemäßen Kombinationen anionische Typen zum Einsatz. Für spezielle Zwecke können jedoch auch kationische, durch Säuren protonisierbare Bindemittel, wie Epoxidharz-Amin-Addukte, eingesetzt werden. Zur Formulierung der erfindungsgemäßen wasserverdünnbaren Beschichtungsmittel können für die Komponente (B) sowohl oxidativ trocknende, d. h. zum Beispiel durch trocknende Fettsäuren modifizierte Alkydharze, eingesetzt werden. Ebenso können auch Alkydharze, welche weitgehend oder ausschließlich mit nichttrocknenden, d. h. gesättigten Fettsäuren modifiziert sind oder welche als sogenannte ölfreie Polyester ohne Fettsäureanteil formuliert sind, verwendet werden. Solche Produkte sind in den Produktionsprogrammen vieler Hersteller für Lackkunstharze zu finden.

Die Komponenten (A) und (B) liegen in Kombinationen vor, welche aus mindestens 30, vorzugsweise 50-75 Gew.-% (A) und 10-50, vorzugsweise 15-25 Gew.-% (B) bestehen.

Als Weichmachungsmittel, welche gegebenenfalls als Kombinationspartner in Anteilen von 15-35, vorzugsweise 20-30 Gew.-% eingesetzt werden, kommen ebenfalls handelsübliche Produkte wie Dicarbonsäurediester, beispielsweise Dibutylphthalat oder -adipat, Chlorparaffine oder Weichmacher vom Typ des Di-(phenoxyäthyl)formals zur Verwendung.

Das Verhältnis zwischen der Summe der Komponenten (A) + (C) und der Komponente (B) liegt zwischen 8,5 : 1 und 1,5 : 1, vorzugsweise zwischen 6,5 : 1 und 3 : 1.

Bei der Herstellung der erfindungsgemäßen Kombinationen wird in allen Fällen eine Lieferform angestrebt, welche dem Kunden die einfache Einarbeitung der Pigmente, Zusatzstoffe und gegebenenfalls eingesetzter Hilfsmittel mittels eines üblichen Schnellrührers möglich macht.

Der Auftrag der Beschichtungsmittel erfolgt in bekannter Weise auf maschinelle oder händische Art.

Die nachfolgenden Beispiele erläutern die Erfindung, ohne sie in ihrem Umfang zu beschränken. Alle Angaben in Teilen oder Prozenten beziehen sich, wenn nichts anderes angegeben ist, auf Gewichtseinheiten.

Folgende Materialien werden in den Beispielen eingesetzt :

Komponente (A) : Physikalisch trocknende Beschichtungsmittel (P1-P9)

P1 : handelsübliches Polystyrolpulver (z. B. SUPRAPAL LG, BASF AG)

P2 : handelsübliches pulverförmiges Vinylchlorid/Vinylacetat-Copolymerisat, Viskosität (20 %ig in MEK) 40 ± 10 mPa · s (z. B. HOSTAFLEX M 131, HOECHST AG)

P3 : handelsübliches, perlenförmiges Vinyltoluol/Acrylsäureester-Copolymerisat, Viskosität (30 %ig in Xylol) ca. 60 mPa · s (z. B. HOSTAFLEX LP 685 n, HOECHST AG)

P4 : handelsübliches vollchloriertes, niedermolekulares synthetisches Kautschuk-Polymer, mittleres Molekulargewicht : 48 000 (Interferenz-Archibald-Verfahren) ; Viskosität (20 %ige Lösung in Toluol/Butanol 95 : 5) 8,5-10 mPa · s (z. B. PERGUT S 10, BAYER AG)

P5 : handelsübliches thermoplastisches Acrylharz, 80 %ig in Xylol, empfohlen als Alleinbindemittel für Straßenmarkierfarben mit guter Dauerelastizität (z. B. VIACRYL SC 126, VIANOVA KUNSTHARZ AG)

P6 : handelsübliches niedrigviskoses, intern plastifiziertes PVC-Mischpolymerisat für chemikalienbeständige Anstriche ; Viskosität (20 %ig in Toluol) ; 20-30 mPa · s (z. B. HOSTAFLEX CM 620, HOECHST AG)

P7 : handelsübliches Vinylacetat/Maleinsäuredibutylester-Copolymerisat ; Viskosität (20 %ig in Äthylacetat) 5-20 mPa · s (z. B. MOWILITH 35/73, HOECHST AG)

P8 : handelsübliches Bitumen (z. B. OLEXOBIT S 45, BP-Bitumen)

P9 : handelsübliches acrylmodifiziertes Alkydharz mit einem Acrylcopolymeranteil von über 50 %, einem Ölgehalt von 13 % (berechnet als Triglycerid) bestehend aus speziellen nichtgilbenden Fettsäuren ; Lieferform : 65 %ig in Xylol/Äthylglycolacetat (z. B. CENTROPLAST VAY 4149, VIANOVA KUNSTHARZ AKTIENGESELLSCHAFT)

Komponente (B) : Wasserlösliches Harz

W1 : handelsübliches, wasserlösliches, oxidativ trocknendes Alkydharz auf Basis spezieller nichtgilbender Fettsäuren ; Lieferform : neutralisiert, 65 %ig in einem Lösungsmittelgemisch ; Viskosität (verdünnt mit Butylglykol auf 50 %) 110-170 s DIN 53211/20 °C (z. B. RESYDROL VWA 24 L, VIANOVA KUNSTHARZ AKTIENGESELLSCHAFT)

W2 : 50 %ige neutralisierte Lösung in Äthanol eines wasserlöslichen Acrylcopolymerisates aus 150 Tlen Acrylsäure, 150 Tlen Hydroxypolypropoxymethacrylat (MG = 600), 450 Tlen Methylmethacrylat und 250 Tlen Butylacrylat, hergestellt gemäß Beispiel 4 der AT-PS 330 923

W3 : 70 %ige nichtneutralisierte Lösung in Butylglykol eines Epoxidharz-Amin-Adduktes gemäß Beispiel 6 der EP-A1 00 00 086 (kationisches Produkt)

W4 : wasserlöslicher, durch Neutralisation mit Aminen in wasserlöslicher Form angebotener ölfreier Polyester. Lieferform : 75 %ig, neutralisiert. Viskosität (mit Wasser auf 40 % verdünnt : 260-890 mPa · s/20 °C, z. B. RESYDROL VWA 85, VIANOVA KUNSTHARZ AKTIENGESELLSCHAFT)

W5 : In folgender Weise hergestelltes, wasserlösliches, mit gesättigten $C_{18}$-Fettsäuren modifiziertes Alkydharz : In einem für die Alkydharzherstellung geeigneten Reaktionsgefäß werden 450 Tle der genannten Fettsäure (UNIMAC 5680), 190 Tle p-tert.Butylbenzoesäure und 10 Tle Maleinsäureanhydrid auf 150 °C erhitzt und 30 Minuten bei dieser Temperatur gehalten. Dann werden 280 Tle Pentaerythrit (Mono-), 230 Tle Isophthalsäureanhydrid, 2 Tle Triphenylphosphit zugesetzt und mit 20 °C pro Stunde auf 220 °C erhitzt. Sobald der Ansatz klar geworden ist, wird in Gegenwart von Xylol als Schleppmittel bis zu einer Säurezahl von weniger als 5 mg KOH/g und einer Grenzviskositätszahl [β] $CHCl_3$, 20 °C von 7,3-7,7 ml/g verestert. Der Ansatz wird mit Xylol auf einen Festkörpergehalt von 90 % verdünnt.

122 Teile dieses Zwischenproduktes, 90 %ig, werden mit 24 Tlen Tetrahydrophthalsäureanhydrid, 22 Tlen Xylol und 0,2 Tlen Triäthylamin versetzt und bei 100 bis 105 °C gehalten, bis eine Säurezahl von 70 bis 75 mg KOH/g erreicht ist. Nach Kühlen auf 70 °C werden 14 Tle Triäthylamin zugegeben und 30 Minuten eingerührt. Der Festkörpergehalt wird mit Xylol auf 70 ± 1 % und der pH-Wert mit Triäthylamin auf einen Bereich von 8,2 bis 5,5 eingestellt.

Komponente (C) : Weichmachungsmittel

WM1 : Weichmachungsmittel auf Basis Chlorparaffin (z. B. HORDAFLEX LC 40 flüssig, HOECHST AG)

WM2 : handelsüblicher Weichmacher vom Typ Di(phenoxyäthyl)-formal ; Viskosität nach DIN 53015 bei 23 °C ca. 60 mPa · s (z. B. DESAVIN, BAYER AG)

WM3 : handelsüblicher Dibutylphthalatweichmacher (z. B. PALATINOL C, BASF AG)

Beispiele 1-8

Die Komponenten (A), (B) und gegebenenfalls (C) werden in den in der TAB 1 angegebenen Mengenverhältnissen zusammen mit dem angegebenen Lösungsmittel bis zur Auflösung aller Festanteile bzw. bis zur vollständigen Homogenität vermischt. In einem schnelllaufenden Rührwerk wird dann mit der angegebenen Wassermenge eine Emulsion hergestellt, in welche die Pigmente, Füllstoffe und Hilfsmittel eingearbeitet werden. Anschließend wird der pH-Wert bei den Beispielen 1-6 und 8 mit Ammoniaklösung auf ca. 9,5 eingestellt.

Beim Beispiel 7 wird die Harzmischung nach der Mischung der Harzkomponenten mit der vorgesehenen Säuremenge neutralisiert. Der pH-Wert des Beschichtungsmittels wird auf ca. 6,0 eingestellt.

Die Harzkomponenten sind in Gewichtsteilen Festharz (= Gew.-%) angegeben. Folgende Abkürzungen wurden verwendet :

TB  Testbenzin

X  Xylol

4

T Toluol
CX Cyclohexanon
MIBK Methylisobutylketon
EGC Äthylglykolacetat
EAC Äthylacetat
A Ammoniaklösung (conc.)
F Ameisensäure

Tabelle 1 : Bindemittelzusammensetzung

| Bei-spiel | KOMP. (A) | KOMP. (B) | KOMP. (C) | zusätzl. Lösungs-mittel | Wasser | Neutrali-sations-mittel |
|---|---|---|---|---|---|---|
| 1 | 54 (P1) | 19 (W1) | 27 (WM1) | 5,5 TB<br>51 X | 100 | 1,0 A |
| 2 | 63 (P2) | 16 (W2) | 21 (WM2) | 6,3 CX<br>52 MBIK | 120 | 2,3 A |
| 3 | 58 (P3) | 14 (W1) | 28 (WM1) | 59 TB | 100 | 1,3 A |
| 4 | 50 (P4) | 20 (W1) | 30 (WM3) | 43 T | 100 | 0,9 A |
| 5 | 89 (P5) | 11 (W1) | -- | -- | 88 | 1,9 A |
| 6 | 40 (P6) | 40 (W2) | 20 (WM2) | 2,4 CX<br>22 MIBK | 100 | 1,8 A |
| 7 | 80 (P7) | 20 (W3) | -- | 5 EGC<br>53 EAC | 97 | 5,7 F |
| 8 | 75 (P8) | 25 (W2) | -- | 32 TB | 209 | 3 A |

In der Tabelle 2 sind die Zusammensetzungen der aus den Bindemittelkombinationen gemäß Tabelle 1 hergestellten Überzugsmittel angegeben.

Tabelle 2

| Harzlösung gemäß TAB 1 | aus Beispiel | (a) | (b) | (c) | (d) | (e) | (f) |
|---|---|---|---|---|---|---|---|
| 257,5 | 1 | 6 | 2 | 100 | 80 | 210 | 60 |
| 280,6 | 2 | 6 | 2 | 100 | 40 | 140 | 120 |
| 260,3 | 3 | 6 | 2 | 50<br>50 (g) | -- | 250 | -- |
| 243,9 | 4 | 6 | 2 | 100 | 80 | 110 | -- |
| 189,9 | 5 | 6 | 2 | 100 | 80 | 200 | 70 |
| 226,2 | 6 | 6 | 2 | 100 | 80 | 200 | 70 |

(a) handelsübliches Netzmittel, 10 %ige wäßrige Lösung auf Basis Na-Polyphosphat (z. B. CALGON, BENCKISERKNAPPSACK)

(b) handelsübliches Netzmittel auf Basis eines Ammoniumsalzes einer niedermolekularen Polyacrylsäure, 30 % Festgehalt (z. B. Additol XW 330, VIANOVA KUNSTHARZ AKTIENGESELLSCHAFT)

(c) Titandioxid Rutil-Type

(d) Silicat-Füllstoff, durchschnittliche Teilchengröße 2-15 µm (z. B. CELITE 281, JOHNS-MANVILLE)

(e) Calcit Füllstoff, ca. 5 µm mittlere Korngröße

(f) Calcit Füllstoff, ca. 15 µm mittlere Korngröße

(g) Eisenoxidrot

Tabelle 3 und Tabelle 4 zeigen die Ergebnisse von Prüfungen bei verschiedenen Verwendungsarten der erfindungsgemäßen Produkte. Dabei werden die gemäß Tabelle 2 hergestellten Überzugsmittel mit Wasser auf die Verarbeitungsviskosität eingestellt. Die Ausprüfung erfolgt, soweit nicht anders angegeben, auf Asbestzementplatten bei Trockenfilmschichten von ca. 150 μm, nachdem die beschichteten Platten 7 Tage bei Raumtemperatur gelagert wurden.

Tabelle 3

| B | ANWENDUNG | VERARBEIT-BARKEIT (a) | Durchtrocknung ca. 250 μm Naßfilm | SPANPROBE DIN 53155 | GITTERSCHNITT DIN 53151 | KUGELSTRAHL-VERSUCH DIN 53154 |
|---|---|---|---|---|---|---|
| 1 | STRA | B/A | 30 | 2 | Gt 1 | 8000 Kugeln |
| 2 | STRA | i.O. | 30 | 1,3 | Gt 2 - 3 | 6000 |
| 3 | FAS | i.O./LS | 40 | 2 | Gt 2 | 9000 |
| 4 | STRA | i.O. | 40 | 3 | Gt 2 | 7000 |
| 5 | FAS | SB/A | 35 | 1,3 | Gt 3 | 1000 |
| 6 | STRA | i.O. | 35 | 2 | Gt 2 | 10.000 |
| 7 | STB | i.O. | 120 | -- | -- | -- |
| 8 | ISO | LP/E | 360 | -- | -- | -- |

STRA Straßenmarkierfarbe
FAS Fassadenfarbe
STB Stein- und Betonimprägnierung
ISO Isolieranstrich
(a) geprüft nach 14 Tagen Lagerung bei Raumtemp.
i.O. in Ordnung
LS leichte Synärese
B Bodensatz
SB starker Bodensatz
A aufrührbar
LP leichte Phasentrennung
E Reemulgierbar

Tabelle 4

| B | WASSERLAGERUNG 7 Tage/25°C | FEUCHTSCHRANKT DIN 50017 7 Tage | FREIBEWITTERUNG 3 Monate | ABRIEB-TEST TABER-ABRASER (b) | WASSERDAMPF-DURCHLÄSSIGKEIT 0 %/55% Luft-feuchtigkt.23°C | UV-Test "SUN-TEST" (c) 7 Tage |
|---|---|---|---|---|---|---|
| 1 | unverändert | unverändert | unverändert | 45 | -- | unverändert |
| 2 | 1. Quellung | unverändert | unverändert | 55 | — | unverändert |
| 3 | unverändert | unverändert | unverändert | -- | $1,5 \text{ g/m}^2\text{h}$ | sehr geringe Aufhellung |
| 4 | 1. Quellung | 1. Quellung | unverändert | 47 | — | sehr geringe Kreidung und Gilbung |
| 5 | unverändert | 1. Quellung | unverändert | -- | $2,5 \text{ g/m}^2\text{h}$ | unverändert |
| 6 | Erweichung | Erweichung | unverändert | 68 | — | leichte Krei-dung |
| 7 | 1. Quellung Blasenb. | Quellung Blasenb. | Gilbung | -- | -- | leichte Gil-bung |
| 8 | 1. Quellung | 1. Quellung | unverändert | -- | $0,1 \text{ g/m}^2\text{h}$ | -- |

(b) Modell 503
Abrieb in mg nach 1000 Umdrehungen mit CS 10 CALIBRASE/500 g
Prüfstück Eisenblech mit 100 μm Trockenfilm
(c) Xenonstrahler Beleuchtungsstärke : 150 klx, Abstand ca. 230 mm
Bestrahlungstärke : 830 W/m²
Schnellbelichtungstischgerät der Fa. « Original Hanau/Heraeus ».

Beispiele 9-11

Die Harzmischungen werden in der in der Tabelle 1A angegebenen Zusammensetzung gemäß den für die Beispiele 1-8 gemachten Angaben hergestellt.

## Tabelle 1A

| Beispiel | Komponente | | | zusätzl. Lösungs- mittel | Wasser | Neutra- lisations- mittel |
|---|---|---|---|---|---|---|
| | (A) | (B) | (C) | | | |
| 9 | 80(P9) | 20(W4) | – | 4 X | 165 | 1 A |
| 10 | 80(P5) | 20(W5) | – | 23 X | 160 | 1 A |

In der Tabelle 2A sind die Zusammensetzungen der aus den Bindemittelkombinationen gemäß Tabelle 1A hergestellten Überzugsmittel angegeben.

## Tabelle 2A

| Harzlösung aus gem.Tab. 1A Bsp. | (a) | (b) | (c) | (d) | (e) | (f) |
|---|---|---|---|---|---|---|
| 270 | 9 | 2 | 1 | 100 | 40 | 200 | 60 |
| 284 | 10 | 2 | 1 | 100 | 40 | 200 | 60 |

((a) — (f) siehe Tabelle 2)

Tabelle 3A und 4A zeigen die Ergebnisse von Prüfungen bei verschiedenen Verwendungsarten der erfindungsgemäßen Produkte. Dabei werden die gemäß Tabelle 2A hergestellten Überzugsmittel mit Wasser auf die Verarbeitungsviskosität eingestellt. Die Ausprüfung erfolgt, soweit nicht anders angegeben, auf Asbestzementplatten bei Trockenfilmschichten von ca. 150 $\mu$m nachdem die beschichteten Platten 7 Tage bei Raumtemperatur gelagert wurden.

## Tabelle 3A

| Bsp. | Anwen- dung | Verarbeit- barkeit * | Durch- trock- nung | Span- probe | Gitter- schnitt DIN53151 | Kugel- strahl- versuch DIN 53154 |
|---|---|---|---|---|---|---|
| 9 | FAS | i.O. | 60 | 2 | Gt 3 | 5000 Kugeln |
| 10 | STRA | L.S. | 40 | 1,3 | Gt 1 | 7000 Kugeln |

FAS Fassadenfarbe
STRA Straßenmarkierungsfarbe
* geprüft nach 14 Tagen Lagerung bei Raumtemperatur
i.O. in Ordnung
L.S. leichte Synärese

## Tabelle 4

| B | WASSERLAGERUNG 7 Tage/25°C | FEUCHTSCHRANKT DIN 50017 7 Tage | FREIBEWITTERUNG 3 Monate | ABRIEB-TEST TABER-ABRASER (b) | WASSERDAMPF-DURCHLÄSSIGKEIT 0 %/55% Luft-feuchtigkt.23°C | UV-Test "SUN-TEST" (c) 7 Tage |
|---|---|---|---|---|---|---|
| 9 | unverändert | leichte Quellung | unverändert | - | $2,2 \ g/m^2h$ | unverändert |
| 10 | unverändert | leichte Quellung | unverändert | 52 | - | unverändert |

(b) Modell 503
Abrieb in mg nach 1 000 Umdrehungen mit CS 10 CALIBRASE/500 g
Prüfstück Eisenblech mit 100 µm Trockenfilm
(c) Xenonstrahler Beleuchtungsstärke : 150 klx, Abstand ca. 230 mm
Bestrahlungstärke : 830 W/m² Schnellbelichtungstischgerät der Fa. « Original Hanau/Heraeus »

0 133 949

**Patentansprüche**

1. Wasserverdünnbare Beschichtungsmittel für mineralische und bituminöse Untergründe, insbesondere für die Herstellung von Straßenmarkierungen und die Beschichtung von Fassaden, bestehend aus einer mit Wasser emulgierbaren Kombination aus

(A) mindestens 30, vorzugsweise 50-75 Gew.-% einer Lösung in organischen Lösungsmitteln eines physikalisch trocknenden, nicht wasserverdünnbaren organischen Polymeren vom Typ der Acrylpolymeren- oder -copolymeren, Vinylpolymeren oder -copolymeren, Chlor- oder Cyclokautschuk, bituminösen Massen oder hochacrylierten Alkydharze,

(B) 10-50 Gew.-%, vorzugsweise 15-25 Gew.-% eines durch Salzbildung wasserlöslich gemachten Alkydharzes und/oder einer ölfreien Polyesters und/oder Acryl- und/oder Vinylcopolymeren und/oder Epoxidharz-Amin-Adduktes und gegebenenfalls

(C) 15-35 Gew.-%, vorzugsweise 20-30 Gew.-% eines Weichmachungsmittels, wobei das Verhältnis zwischen der Komponenten (A) + gegebenenfalls (C) und der Komponente (B) in einem Bereich zwischen 8,5 : 1 und 1,5 : 1, vorzugsweise zwischen 6,5 : 1 und 3 : 1 liegt, und den üblichen Pigmenten, Füllstoffen und Hilfsmitteln.

2. Wasserverdünnbare Beschichtungsmittel nach Anspruch 1, dadurch gekennzeichnet, daß man die Komponente (A) in Form von Lösungen, vorzugsweise in nichtwasserverdünnbaren Lösungsmitteln einsetzt.

3. Wasserverdünnbare Beschichtungsmittel nach den Ansprüchen 1 und 2, dadurch gekennzeichnet, daß man als Komponente (B) anionische, durch Neutralisation mit Basen wasserlöslich gemachte Polymere einsetzt.

4. Wasserverdünnbare Beschichtungsmittel nach den Ansprüchen 1 und 2, dadurch gekennzeichnet, daß man als Komponente (B) kationische, durch Neutralisation mit Säuren wasserlöslich gemachte Polymere einsetzt.

5. Wasserverdünnbare Beschichtungsmittel nach den Ansprüchen 3 und 4, dadurch gekennzeichnet, daß man als Komponente (B) mit oxidativ trocknenden Fettsäuren modifizierte Alkydharze einsetzt.

6. Wasserverdünnbare Beschichtungsmittel nach den Ansprüchen 3 und 4, dadurch gekennzeichnet, daß man als Komponente (B) weitgehend oder vollständig mit gesättigten Fettsäuren modifizierte Alkydharze oder ölfreie Polyester einsetzt.

7. Wasserverdünnbare Beschichtungsmittel nach den Ansprüchen 1 bis 4, dadurch gekennzeichnet, daß man die Pigmente, Füllstoffe und Hilfsmittel in die wäßrige Emulsion der Komponenten (A), (B) und (C) einarbeitet.

8. Verfahren zur Herstellung wasserverdünnbarer Beschichtungsmittel für mineralische und bituminöse Untergründe, insbesonders für die Herstellung von Straßenmarkierungen und die Beschichtung von Fassaden oder ähnlichem, dadurch gekennzeichnet, daß man eine Mischung aus

(A) mindestens 30, vorzugsweise 50-75 Gew.-% eines physikalisch trocknenden, nicht wasserlöslichen Polymeren vom Typ der Acrylpolymeren oder -copolymeren, Vinylpolymeren oder -copolymeren, Chlor- oder Cyclokautschuk oder bituminösen Massen und/oder hochacrylierten Alkyldharzen,

(B) 10-50, vorzugsweise 15-25 Gew.-% eines nach Salzbildung mit Basen bzw. Säuren wasserlöslichen, mit trocknenden und/oder nichttrocknenden Fettsäuren modifizierten Alkydharzes und/oder eines ölfreien Polyesters und/oder eines Acryl- und/oder Vinylcopolymeren und/oder eines Epoxidharz-Amin-Adduktes und gegebenenfalls

(C) 15-35, vorzugsweise 20-30 Gew.-% eines Weichmachungsmittels,

gegebenenfalls nach Zusatz eines die Komponente (A) lösenden, vorzugsweise nicht wassermischbaren Lösungsmittels, in eine homogene Phase überführt, in 80-250, vorzugsweise 90-120 Gew.-% (bezogen auf das eingesetzte Festharz) Wasser emulgiert und die salzbildenden Gruppen der Komponente (B) mit Basen bzw. Säuren neutralisiert, sowie gegebenenfalls in die Emulsion Pigmente, Füllstoffe und Hilfsmittel einarbeitet, wobei das Verhältnis zwischen der Summe der Komponenten (A) + gegebenenfalls (C) und der Komponente (B) zwischen 8,5 : 1 und 1,5 : 1, vorzugsweise 6,5 : 1 und 3 : 1 liegt.

9. Verfahren nach Anspruch 8, dadurch gekennzeichnet, daß man die Komponenten (A) bereits vor der Mischung mit den weiteren Komponenten in einem geeigneten Lösungsmittel, vorzugsweise einem nichtwassermischbaren Lösungsmittel, auflöst.

**Claims**

1. Water dilutable coating medium for mineral and bituminous surfaces, particularly for the preparation of road markings and the coating of exterior walls, consisting of a water-emulsifiable combination of

(A) at least 30, preferably 50-75 % by weight of a solution in organic solvents of a physically drying

**0 133 949**

non-water dilutable organic polymer of the type of acrylic polymers or copolymers, vinyl polymers or copolymers, chloro- or cyclo rubber, bituminous masses or highly acrylated alkyd resins,

(B) 10-50 % by weight, preferably 15-25 % by weight of an alkyd resin rendered water soluble through salt formation and/or an oilfree polyester and/or acrylic and/or vinylcopolymer and/or epoxy resin amine adduct and optionally

(C) 15-35 % by weight, preferably 20-30 % by weight of a plasticising agent,
the ratio between component (A) plus optionally (C) and component (B) being in a range of between 8.5 : 1 and 1.5 : 1, preferably between 6.5 : 1 and 3 : 1 and the normal pigments, extenders and auxiliary agents.

2. Water dilutable coating compositions according to claim 1, characterised in that component (A) is used in the form of solutions, preferably in non-water dilutable solvents.

3. Water dilutable coating compositions according to claims 1 and 2, characterised in that as component (B) anionic polymers are used rendered water soluble through neutralisation with bases.

4. Water dilutable coating compositions according to claims 1 and 2, characterised in that as component (B) cationic polymers are used, rendered water soluble through neutralisation with acids.

5. Water dilutable coating compositions according to claims 3 and 4, characterised in that as component (B) alkyd resins modified with oxidising fatty acids are used.

6. Water dilutable coating compositions according to claims 3 and 4, characterised in that as component (B) alkyd resins modified substantially or completely with saturated fatty acids or oil-free polyesters are used.

7. Water dilutable coating compositions according to claims 1 to 4, characterised in that the pigments, extenders ad auxiliary substances are incorporated in the aqueous emulsion of components (A), (B) and (C).

8. Process for producing water dilutable coating compositions for mineral and bitiminous substrates, particularly for the production of road marking paints and the coating of exterior walls or similar substrates, characterised in that a mixture of

(A) at least 30, preferably 50-75 % of a physically drying, non-water soluble polymer of the type of acryl polymers or copolymers, vinylpolymers of -copolymers not water soluble, chloro- or cyclo rubber or bitiminous masses and/or highly acrylated alkyd resins,

(B) 10-50 %, preferably 15-25 % by weight of an alkyd resin water soluble upon salt formation with bases or acids, modified with drying and/or non-drying fatty acids and/or of an oil-free polyester and/or of an acrylic and/or vinyl copolymer and/or an epoxy resin amine adduct and optionally

(C) 15-35 %, preferably 20-30 % by weight of a plasticiser,
optionally after addition of a solvent dissolving component (A), preferably not water-miscible, is transferred to a homogeneous phase, is emulsified in 80-250, preferably 90-120 % by weight (calculated on resin solids) of water, the salt forming groups of component (B) are neutralised with bases or acids, and, optionally, pigments, extenders, and auxiliary substances are incorporated, the ratio between the sum of component (A) and optionally component (C) and component (B) lying between 8.5 : 1 and 1.5 : 1, preferably 6.5 : 1 and 3 : 1.

9. Process according to claim 8, characterised in that component (A) is dissolved in a suitable solvent, preferably a water-immiscible solvent, prior to the mixing with the other components.

**Revendications**

1. Matériaux de revêtement diluables à l'eau pour substrats minéraux et bitumineux, notamment pour la préparation de peintures de marquage de voies et de revêtement pour façades, consistant en une combinaison émulsifiable à l'eau à partir de

(A) au moins 30 %, de préférence 50-75 % en poids d'une solution dans des solvants organiques d'un polymère organique non diluable à l'eau, séchant physiquement, du type des polymères ou copolymères acryliques, des polymères ou copolymères vinyliques, du chloro- ou cyclocaoutchouc, de masses bitumineuses ou de résines alkydes modifiées aux monomères acryliques au taux élevé

(B) 10-50 % en poids, de préférence, 15-25 % en poids d'une résine alkyde rendue soluble dans l'eau par salification et/ou d'un polyester exempt d'huile et/ou de copolymères acryliques et/ou vinyliques et/ou d'un produit d'addition-résine époxyde-amine et le cas échéant,

(C) 15-35 % en poids, de préférence 20-30 % en poids d'un plastifiant,
à cette occasion, le rapport entre le composant (A) + éventuellement (C) et le composant (B) se situe dans un domaine entre 8,5 : 1 et 1,5 : 1, de préférence entre 6,5 : 1 et 3 : 1, et avec les pigments, matières de charge, et adjuvants habituels.

2. Matériaux de revêtement diluables à l'eau selon la revendication 1, caractérisés en ce que l'on met

# 0 133 949

en œuvre le composant (A) sous forme de solutions, de préférence dans des solvants non diluables à l'eau.

3. Matériaux de revêtement diluables à l'eau selon les revendications 1 et 2, caractérisés en ce que l'on met en œuvre en tant que composant (B) des polymères anioniques, rendus solubles dans l'eau par neutralisation avec des bases.

4. Matériaux de revêtement diluables à l'eau selon les revendications 1 et 2, caractérisés en ce que l'on met en œuvre en tant que composant (B) des polymères cationiques, rendus solubles dans l'eau par neutralisation avec des acides.

5. Matériaux de revêtement diluables à l'eau selon les revendications 3 et 4, caractérisés en ce que l'on met en œuvre en tant que composant (B) des résines alkydes modifiées par des acides gras séchant par oxydation.

6. Matériaux de revêtement diluables à l'eau selon les revendications 3 et 4, caractérisés en ce que l'on met en œuvre en tant que composant (B) des polyesters exempts d'huile ou des résines alkydes modifiées dans une large mesure ou complètement par des acides gras saturés.

7. Matériaux de revêtement diluables à l'eau selon les revendications 1 à 4, caractérisés en ce que l'on introduit les pigments, matières de charge et adjuvants dans l'émulsion aqueuse des composants (A), (B) et (C).

8. Procédé pour la préparation de matériaux de revêtement diluables à l'eau pour des substrats minéraux et bitumineux, notamment pour la préparation de peintures destinées au marquage des voies et au revêtement de façades ou similaire, caractérisé en ce qu'un mélange constitué à partir de

(A) au moins 30 % en poids, de préférence 50-75 % en poids, d'un polymère non soluble dans l'eau, séchant physiquement du type des polymères ou copolymères acryliques, des polymères ou copolymères vinyliques, du chloro- ou cyclocaoutchouc ou des masses bitumineuses et/ou des résines alkydes modifiées aux monomères acryliques au taux élevé,

(B) 10-50 % en poids, de préférence 15-25 % en poids, d'une résine alkyde non soluble dans l'eau, modifiée par des acides gras séchant et/ou non séchant après salification avec des bases ou des acides et/ou d'un polyester exempt d'huile et/ou d'un copolymère acrylique et/ou vinylique et/ou d'un produit d'addition résine époxyde-amine et éventuellement,

(C) 15-35 %, de préférence 20-30 % en poids d'un plastifiant,
que l'on transforme en une phase homogène éventuellement après addition d'un solvant de préférence non miscible à l'eau, dissolvant le composant (A), que l'on émulsifie dans 80-250 %, de préférence 90-120 % en poids (rapportés à la résine solide mise en œuvre) d'eau et les groupes salifiants du composant (B) sont neutralisés avec des bases ou des acides, éventuellement des pigments, des matières de charge et des adjuvants, étant également introduits dans l'émulsion, le rapport entre la somme des composants (A) + éventuellement (C) et du composant (B) se situant entre 8,5 : 1 et 1,5 : 1, de préférence entre 6,5 : 1 et 3 : 1.

9. Procédé selon la revendication 8, caractérisé en ce que l'on dissout le composant (A) déjà avant le mélange avec les autres composants dans un solvant approprié, de préférence dans un solvant non miscible à l'eau.